Europäisches Patentamt

European Patent Office

Office européen des brevets

(19)

(11) EP 0 404 268 B1

(12) **EUROPÄISCHE PATENTSCHRIFT**

(45) Veröffentlichungstag und Bekanntmachung des Hinweises auf die Patenterteilung:
07.02.1996 Patentblatt 1996/06

(51) Int Cl.⁶: **H04J 3/07**

(21) Anmeldenummer: **90201626.0**

(22) Anmeldetag: **21.06.1990**

(54) **Schaltungsanordnung zur Anpassung der Bitraten zweier Signale**

Circuit for adapting the rates of two signals

Dispositif d'adaptation des débits de deux signaux

(84) Benannte Vertragsstaaten:
**DE ES FR GB**

(30) Priorität: **22.06.1989 DE 3920391**

(43) Veröffentlichungstag der Anmeldung:
**27.12.1990 Patentblatt 1990/52**

(73) Patentinhaber:
• **Philips Patentverwaltung GmbH**
**D-22335 Hamburg (DE)**
Benannte Vertragsstaaten:
**DE**
• **Philips Electronics N.V.**
**NL-5621 BA Eindhoven (NL)**
Benannte Vertragsstaaten:
**ES FR GB**

(72) Erfinder:
• **Urbansky, Ralph, Dipl.-Ing.**
**D-8501 Schwaig 2 (DE)**
• **Niegel, Michael, Dipl.-Ing.**
**D-8500 Nürnberg 30 (DE)**
• **Robledo, Miguel, Dr.-Ing.**
**D-8300 Nürnberg 10 (DE)**

(74) Vertreter: **Peuckert, Hermann, Dipl.-Ing. et al**
**D-22335 Hamburg (DE)**

(56) Entgegenhaltungen:
DE-A- 3 843 372          US-A- 4 002 844
US-A- 4 397 017

## Beschreibung

Die Erfindung betrifft eine Schaltungsanordnung zur Anpassung der Bitraten zweier Signale. Eine erste Schaltungsanordnung ist dabei zur Einfügung von Stopfbits und weiteren Informationen in ein plesiochrones Signal und eine zweite Schaltungsanordnung zum Entfernen von Stopfbits und den weiteren Informationen aus dem plesiochronen Signal vorgesehen.

Derartige Schaltungsanordnungen werden in der Nachrichtenübertragung z.B. bei plesiochronen Multiplexern benötigt, die plesiochrone Signale bündeln. Zwei binäre Signale heißen plesiochron, wenn ihre Bitraten nominell gleich sind, tatsächlich aber innerhalb einer gegebenen Toleranz vom Nennwert abweichen können. Bevor plesiochrone Signale durch einen plesiochronen Multiplexer zusammengefaßt werden können, müssen sie alle auf die gleiche Bitrate gebracht werden, die (bei sogenannter positiver Stopftechnik) etwas höher liegt als die Bitrate, die die einzelnen plesiochronen Signale haben. Dieser Bitratenunterschied wird u.a. dadurch ausgeglichen, daß in das Signal höherer Bitrate von Zeit zu Zeit zusätzlich sogenannte Stopfbits aufgenommen werden. Eine Schaltungsanordnung, die unter anderem diesen Vorgang vorbereitet und durchführbar macht, ist die vorliegende Anordnung. Eine entsprechende Schaltungsanordnung ist einem plesiochronen Demultiplexer nachzuschalten, um die Stopfbits wieder zu entfernen und dann die Bitrate auf ihren ursprünglichen Wert zu bringen.

Eine Schaltungsanordnung zur Anpassung der Bitraten zweier binärer Signale mit einem elastischen Speicher ist z.B. aus der DE 25 18 051 A1 bekannt. Bei dieser Anordnung wird ein erster Adreßzähler mit dem Bittakt des ersten und ein zweiter Adreßzähler mit dem (leicht veränderten) Bittakt des zweiten Signales getaktet. Die Adreßzähler erzeugen Schreib- und Leseadressen für einen adressierbaren Pufferspeicher. Das erste Signal wird daher bitweise in den Pufferspeicher eingelesen bzw. bitweise aus ihm wieder ausgelesen. Eine Stopfentscheidungsschaltung, die bei der bekannten Anordnung aus einem Phasenvergleicher und einer Steuerschaltung besteht, vergleicht Schreib- und Leseadressen der Zähler und entscheidet anhand des Ausgangssignals des Phasenvergleichers, ob in dem Takt für den Lesezähler eine Taktflanke unterdrückt und statt des nächstfolgenden Bits im Pufferspeicher ein Stopfbit übertragen werden muß.

Soll die bekannte Schaltungsanordnung für Bitraten in der Größenordnung von 140 Mbit/s und darüber eingesetzt werden, so muß sie in ECL-Technologie ausgeführt werden. Bei Schaltungen in ECL-Technologie treten jedoch höhere Verlustleistungen auf als bei vergleichbaren Schaltungen in CMOS-Technologie. Schaltungen in CMOS-Technologie sind dagegen nur für Frequenzen bis etwa 80 MHz brauchbar.

Eine Schaltungsanordnung zur Taktanpassung in der digitalen Nachrichtentechnik, die für Bitraten in der Größenordnung von 140 Mbit/s verwendet werden kann, jedoch nur wenige Bausteine in ECL-Technologie benötigt, ist aus der nicht vorveröffentlichten EP-0 374 436 A2 bekannt.

Diese enthält einen elastischen Speicher, dem 4 pararllele Bits jeweils zugeführt werden. Die parallelen Bits sind mittels eines Serien-Parallel-Wandlers aus einem seriellen ersten Signal gebildet worden. Die in dem elastischen Speicher gepufferten Bits werden einem Zusatzspeicher und einem Umschalter geliefert. Der Umschalter gibt jeweils abhängig von seiner Schaltstellung bestimmte Bits direkt von dem elastischen Speicher oder dem Zusatzspeicher an einen Parallel-Serien-Wandler zur Bildung eines seriellen zweiten Signals. Der Umschalter wird von einer Steuerung entsprechend einem Stopfkriterium eingestellt. Das Stopfkriterium kann durch Auswerten des Füllstandes des elastischen Speichers oder durch einen Phasenvergleich gewonnen werden. Es wird also nur bei einem Stopfvorgang der zuletzt eingestellte Schaltzustand verändert.

Der Erfindung liegt die Aufgabe zugrunde, den von der bekannten Schaltungsanordnung erzeugten Jitter weiter zu reduzieren.

Diese Aufgabe wird durch eine Schaltungsanordnung zur Anpassung der Bitraten zweier Signale mit folgenden Merkmalen gelöst:
Die Schaltungsanordnung enthält

- einen Serien-Parallel-Wandler zur Wandlung von jeweils n seriellen Bits eines ersten Signals in eine Gruppe von n parallelen Bits,
- einen elastischen Speicher zum jeweiligen Einschreiben und zum jeweiligen Auslesen einer Gruppe von parallelen Bits,
- eine ein zweites Signal liefernde Auswahlmatrix, die bei einem Stopfvorgang zur Verzögerung bestimmter Bits von aufeinanderfolgenden Gruppen paralleler Bits und zur Einfügung von Stopfbits anstelle der bestimmten Bits vorgesehen ist, und
- eine Steuervorrichtung zur Steuerung des Auslesevorgangs aus dem elastischen Speicher und der Auswahlmatrix in Abhängigkeit von einem Phasenvergleich eines Schreibtaktes und eines Lesetaktes zu einem immer im gleichen zeitlichen Abstand von einer Stopfstelle liegenden Zeitpunkt und einer Füllstandsüberwachung des elastischen Speichers.

Die erfindungsgemäße Schaltungsanordnung vergleicht noch miteinander die Phasen des Schreibtaktes und des Lesetaktes, mit dem die Gruppen von parallelen Bits in den elastischen Speicher eingeschrieben und ausgelesen werden.

In Abhängigkeit von der Phasenlage wird die Stopfentscheidung getroffen, wodurch sich eine Reduzierung des Jitters ergibt. Hierbei ist wichtig, daß die Stopfentscheidung immer im gleichen zeitlichen Abstand von der Stopfstelle getroffen wird.

Zur Erzeugung des Schreib- und Lesetaktes sind Teiler in der Schaltungsanordnung enthalten. Die Teiler, die ein Teilerverhältnis von 1:n aufweisen, sind jeweils zur Erzeugung des Schreibtaktes aus dem Bittakt des ersten Signals und des Lesetaktes aus dem Bittakt des zweiten Signals vorgesehen.

Ein Phasenvergleicher ist zum Phasenvergleich des Schreibtaktes und des Lesetaktes vorgesehen. Die Steuervorrichtung wertet das Ausgangssignal des Phasenvergleichers beim Auftreten einer vorbestimmten Flanke aus und stellt die Auswahlmatrix für die Einfügung wenigstens eines Stopfbits ein, wenn die Füllstandsüberwachung ein zu starkes Abweichen vom Sollwert feststellt.

Die Auswahlmatrix kann durch eine Spurzahl s charakterisiert werden. Die Steuervorrichtung ist zur Erhöhung der Spurzahl (s) um eine Einheit Modulo n pro Stopfbit und zur Wiederholung des Auslesens einer Bitgruppe aus dem elastischen Speicher vorgesehen, wenn die Spurzahl s den Wert n - 1 überspringt.

Die vorbestimmte Flanke ist die m-te Flanke relativ zu einer Bezugsflanke im Lesetakt, wobei sich m aus der Forderung ergibt, den Betrag des Ausdrucks

$$m*TL/TS - k - s/n$$

als Funktion der ganzen Zahlen m und k möglichst klein zu machen, wobei TS bzw. TL die Periodendauer des Schreibtaktes bzw. Lesetaktes bedeutet.

Bei dem elastischen Speicher handelt es sich um einen adressierbaren Pufferspeicher, der zum Empfang von Schreibadressen von einem den Schreibtakt erhaltenen Schreibzähler und von Leseadressen von einem den Lesetakt erhaltenen Lesezähler vorgesehen ist.

Die Füllstandsüberwachung dient zum Vergleich der Schreib- und Leseadressen und bei Abweichung von einer Adressensolldifferenz zur Abgabe eines Signals an die Steuervorrichtung. Die Steuervorrichtung ist zur Regelung der Adressendifferenz durch eine Veränderung des Schaltzustandes der Auswahlmatrix und durch ein Anhalten des Lesezählers vorgesehen.

Die Auswahlmatrix ist mit einem Parallel-Serien-Wandler zur Wandlung von jeweils einer Gruppe von n parallen Bits in jeweils n serielle Bits eines zweiten Signals gekoppelt.

Die Erfindung bezieht sich auch auf eine Schaltungsanordnung zur Anpassung der Bitraten zweier Signale mit

- einem Serien-Parallel-Wandler zur Wandlung von jeweils n seriellen Bits eines ersten Signals in eine Gruppe von n parallelen Bits,
- einer Auswahlmatrix, die bei einem Entstopfvorgang zur Verzögerung bestimmter Bits von aufeinanderfolgenden Gruppen paralleler Bits des ersten Signals und zur Weiterleitung von Gruppen paralleler Bits mit Ausnahme der Stopfbits vorgesehen ist,
- einem elastischen Speicher zum jeweiligen Einschreiben einer von der Auswahlmatrix gelieferten Gruppe von parallelen Bits und zum jeweiligen Auslesen einer Gruppe von parallelen Bits für ein zweites Signal,
- einer Steuervorrichtung zum Empfang von Stopfinformationsbits und zur Steuerung der Auswahlmatrix und
- einer Phasenregelschleife zur Steuerung des Ausschreibens der Bits aus dem elastischen Speicher.

In dieser Schaltungsanordnung wird beispielsweise aus einem STM-1-Signal wieder ein plesiochrones Signal gewonnen.

Zur Erzeugung eines Schreib- und Lesetaktes sind Teiler vorgesehen, die jeweils ein Teilerverhältnis von 1:n aufweisen und zur Erzeugung des Schreibtaktes aus dem Bittakt des ersten Signals und des Lesetaktes aus dem Bittakt des zweiten Signals dienen.

Die Phasenregelschleife in der Schaltungsanordnung enthält einen Phasenvergleicher zum Phasenvergleich der von einem Schreibzähler und einem Lesezähler gelieferten Adressen und zur Gewinnung des Bittaktes für das zweite Signal.

Bei dem dem elastischen Speicher handelt es sich um einen adressierbaren Pufferspeicher, der zum Empfang von Schreibadressen von dem Schreibzähler und von Leseadressen von dem Lesezähler vorgesehen ist. Der elastische Speicher ist mit einem Parallel-Serien-Wandler zur Wandlung von jeweils einer Gruppe von n parallen Bits in jeweils n serielle Bits eines zweiten Signals gekoppelt.

Anhand der Figuren und anhand eines Ausführungsbeispiels für einen plesiochronen Multiplexer und einen plesiochronen Demultiplexer soll die Erfindung näher erläutert werden.

Es zeigt:

Fig. 1 ein Prinzipschaltbild der erfindungsgemäßen Anordnung für einen plesiochronen Multiplexer,
Fig. 2 eine Auswahlmatrix,
Fig. 3 eine Tabelle zur Funktionserläuterung der Auswahlmatrix und
Fig. 4 ein Prinzipschaltbild der erfindungsgemäßen Anordnung für einen plesiochronen Demultiplexer.

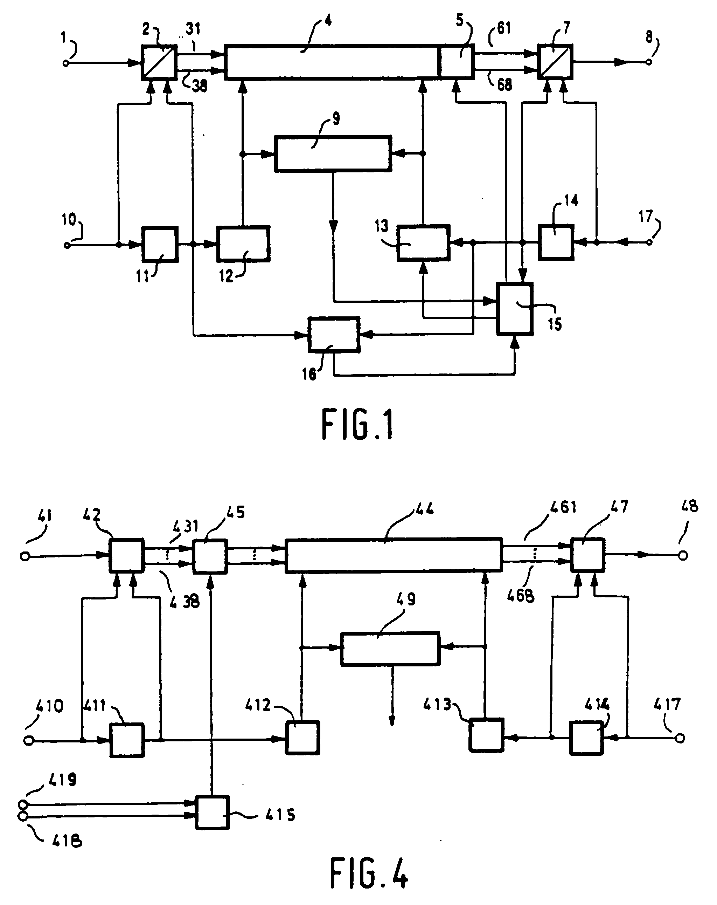

In Figur 1 liegt an einer Klemme 1 ein erstes binäres Signal mit einer nominellen Bitrate von 139,264 Mbit/s an, und an einer Ausgangsklemme 8 ein nach Rahmen strukturiertes zweites binäres Signal mit einer nominellen Bitrate von 155,52 Mbit/s. Das zweite Binärsignal enthält neben sämtlichen Bits des ersten Signals Stopfbits, Stopfinformationsbits sowie weitere Hilfsinformationen.

Der Rahmen ist der sogenannte synchrone Transportmodul STM-1 (vergleiche hierzu z.B. die CCITT-Empfehlungsentwürfe G 707, G 708 und G 709).

An einer Klemme 10 liegt der Bittakt des ersten Signales an. Dieser Takt wird durch einen ersten Teiler 11 im Verhältnis 1:8 untersetzt. Der untersetzte Takt - nachfolgend Schreibtakt genannt - hat eine Impulsfolgefrequenz von 17,408 MHz. Im vorliegenden Beispiel ist also die ganzzahlige Variable n in der allgemeinen Lehre zu 8 zu wählen.

Mit dem Schreibtakt und dem ursprünglichen Bittakt wird ein Serien-Parallel-Wandler 2 versorgt, der acht serielle Bits des ersten Signales in acht parallele Bits umwandelt, die über Leitungen 31 bis 38 an acht Leseeingänge eines Pufferspeichers 4 geführt werden. Auf jeder der Leitungen 31 bis 38 liegen Bits mit der Folgefrequenz von 17,408 MHz an, so daß alle Bausteine - bis auf die weiter unten gemachten Ausnahmen - die in Figur 1 rechts vom Teiler 11 und dem Serien-Parallel-Wandler 2 liegen, in verlustarmer CMOS-Technologie ausgeführt sind. Mit dem Schreibtakt wird ein erster Adreßzähler 12 - im folgenden Schreibzähler genannt - weitergestellt, der zyklisch Schreibadressen für den acht Bit (ein Byte) breiten Pufferspeicher 4 erzeugt; der Schreibtakt wird auch an einen Eingang eines Phasenvergleichers 16 geleitet. Für den Phasenvergleicher 16 ist jedoch auch eine andere Untersetzung des Bittaktes möglich. Unter einer vom Schreibzähler 12 erzeugten Schreibadresse wird das erste Signal byteweise im Pufferspeicher 4 abgelegt.

Der Bittakt des zweiten Binärsignales, der an einer Klemme 17 anliegt, wird an einen zweiten Teiler 14 geleitet, der diesen Takt ebenfalls im Verhältnis 1:8 herunterteilt.

Dieser geteilte Takt - nachfolgend Lesetakt genannt - und der ursprüngliche Bittakt takten einen Parallel-Serien-Wandler 7, der das parallel verarbeitete erste Signal in das serielle zweite Signal mit einer Bitrate von 155,52 Mbit/s wandelt und an eine Ausgangsklemme 8 weiterleitet. Alle Bausteine, die nach Figur 1 links vom Teiler 14 und vom Parallel-Seriell-Wandler 7 liegen, sind - bis auf die Bausteine 2 und 11 - in verlustarmer CMOS-Technologie ausgeführt, da sie nur Taktfrequenzen bis maximal 19,44 MHz zu verarbeiten haben.

Der Lesetakt wird zur zyklischen Erzeugung von Leseadressen durch den Adreßzähler 13 verwendet und gleichzeitig einem zweiten Eingang des Phasenvergleichers 16 und einer Steuereinheit 15 zugeführt.

Eine Füllstandsüberwachung 9 überwacht den Abstand von Schreib- und Leseadressen und gibt ein charakteristisches Signal an die Steuervorrichtung 15 ab, wenn dieser Abstand zu sehr von seinem Sollwert abweicht. Als Sollwert ist die Hälfte der größten Adresse vorgesehen.

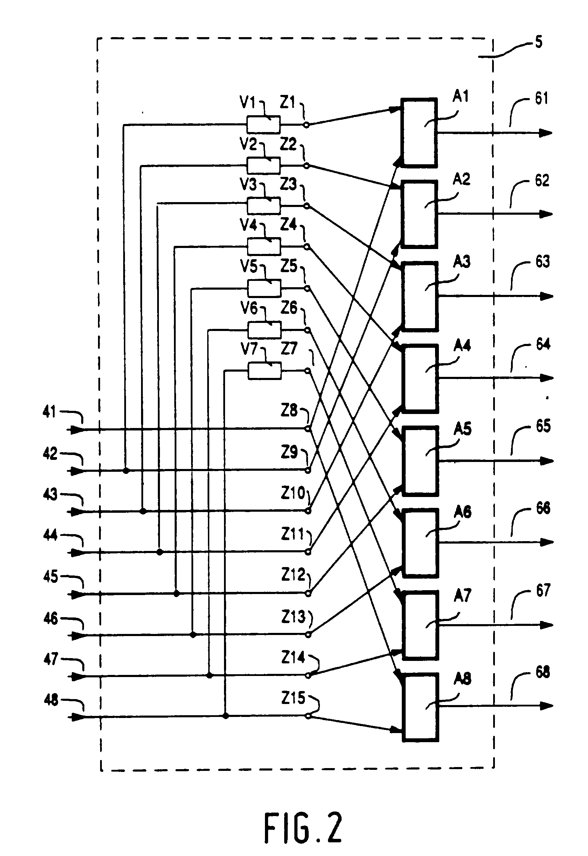

Die Funktionsweise der Schaltungsanordnung nach Figur 1 wäre leichter verständlich, wenn im Rahmen des zweiten Signales alle Hilfsinformationen byteweise übertragen werden könnten. Im vorliegenden Fall ist jedoch erschwerend, daß manche Hilfsinformation (Rahmenkopf zum Beispiel) byteweise eingefügt werden müssen, die Stopfbits jedoch nur bitweise. Um einzelne Bits oder Bytes in das zweite Signal einfügen zu können, sind die acht Leseausgänge 41 bis 48 (vergleiche Figur 2) des Pufferspeichers 4 mit ebensovielen Eingängen einer Auswahlmatrix 5 verbunden.

Figur 2 zeigt ein Ausführungsbeispiel einer solchen Auswahlmatrix. Sie enthält sieben Verzögerungsglieder V1 bis V7, die mit sieben ihrer Eingänge 42 bis 47 verbunden sind. Die Verzögerungsglieder V1 bis V7 verzögern die Bits an den Eingängen 42 bis 47 der Auswahlmatrix 5 um eine Taktperiode des Lesetaktes. Insgesamt ergeben sich auf diese Weise fünfzehn interne Anschlußpunkte Z1 bis Z15 der Auswahlmatrix. Des weiteren enthält die Auswahlmatrix acht 8:1-Auswahlschaltungen A1 bis A8, deren Ausgänge gleichzeitig die Ausgänge 61 bis 68 der Auswahlmatrix 5 sind. Jede der Auswahlschaltungen A1 bis A8 hat acht Eingänge, von denen jeder mit einem der Anschlußpunkte Z1 bis Z15 verbunden ist. Im einzelnen gilt, daß die Auswahlschaltung A1 mit den Anschlußpunkten Z1 bis Z8 verbunden ist (nur die erste und die letzte Verbindung sind in Figur 2 eingezeichnet), die zweite Auswahlschaltung mit den Anschlußpunkten Z2 bis Z9 usw. bis zur Auswahlschaltung A8, die mit den Anschlußpunkten Z8 bis Z15 verbunden ist. Die Auswahlschaltungen A1 bis A8 verbinden - gesteuert durch Adressen - einen ihrer Eingänge mit ihrem Ausgang. Die Steuerleitungen für die Auswahlschaltungen A1 bis A8 und Taktversorgungsleitungen sind in Figur 2 nicht eingetragen.

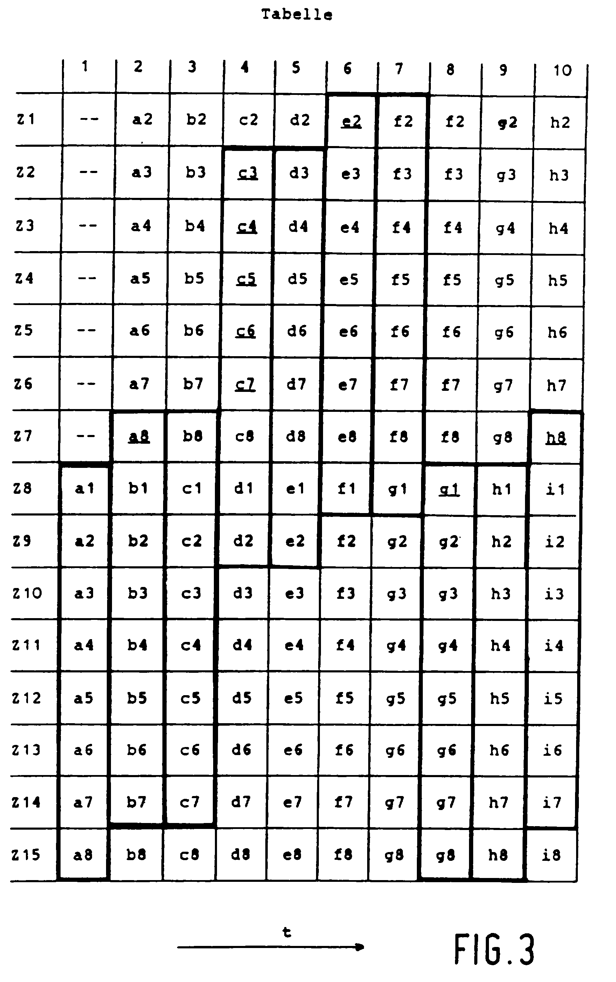

Fig. 3 dient der Erläuterung der Funktionsweise der Auswahlmatrix nach Fig. 2. Die Tabelle nach Fig. 3 enthält in ihrer linken Randspalte die Anschlußpunkte Z1 bis Z15. In der obersten Zeile sind Nummern von Taktperioden des Lesetaktes angegeben, die gleichzeitig als Spaltennummern verwendet werden. Insgesamt wird die Funktionsweise der Auswahlmatrix 5 anhand der Ereignisse von 10 Taktperioden des Lesetaktes demonstriert. In Spalte 1 sind die Daten angegeben, die während einer ersten Lesetaktperiode an den Anschlußklemmen Z1 bis Z15 anliegen; es sind dies die Bits a1 bis a8 des ersten ausgelesenen Bytes. Die doppelte Umrandung deutet an, daß die Bits des ersten Bytes in der Reihenfolge von oben nach unten, also hier in der Reihenfolge a1 bis a8, durch entsprechende Einstellung der Auswahlschaltungen A1 bis A8 auf die Ausgangsleitungen 61 bis 68 der Auswahlmatrix 5 weitergegeben werden. In der zweiten Taktperiode liegen - wie die Spalte 2 der Fig. 3 zeigt - die Bits b1 bis b8 des zweiten Bytes an den Anschlußklemmen Z8 bis Z15 an, während die Bits a2 bis a8 des vorangegangenen Bytes an den Anschlußpunkten Z1 bis Z7 anliegen. Der doppelt umrandete Teil in der Spalte 2 läßt wieder den Schaltzustand der Auswahlschaltungen A1 bis A8 erkennen. Jetzt werden die Anschlußpunkte Z7 bis Z14 mit den Leitungen 61 bis 68 verbunden. Erkennbar ist auch, daß vom zweiten Byte die Bits b1 bis b7 übertragen werden und das achte Bit a8 des vorangegangenen Bytes wiederholt wird. Dieses wiederholte Bit wird auf der Leitung 61 weitergeleitet und kann, wenn es auf seinen Wert nicht ankommt (z.B. Stopfbit), unverändert bleiben; andernfalls muß es von einer nicht gezeigten Schaltungsanordnung mit einem ganz bestimmten Wert überschrieben werden. In der dritten Taktperiode des Lesetaktes erscheinen die Bits C1 bis C8 eines neuen Bytes an den Anschlußklemmen Z8 bis Z15, wogegen die Bits b2 bis b8 des vorangegangenen Bytes an den Anschlußklemmen Z1 bis Z7 anliegen. Der doppelt umrandete Teil in der dritten Spalte läßt erkennen, daß als erstes Bit das im vorangegangenen Lesetakt nicht übertragene Bit b8 des zweiten Bytes nun auf die Leitung 61 gegeben wird. Die Unterstreichung des Bits a8 bedeutet, daß die durch ihn übertragene Information dem Empfänger schon bekannt ist und es daher überschrieben werden darf, falls eine solche Überschreibung notwendig ist. Entsprechendes gilt für die vierte Spalte, in der vom vierten Byte nur die Bits d1 und d2 übertragen werden und die Übertragung des fehlenden Bits C8 des dritten Bytes nachgeholt wird. Alle anderen Bits C3 bis C7 dürfen überschrieben werden. Ist keine zusätzliche Übertragung von Bits gefordert, bleibt der Schaltzustand der Auswahlschaltungen A1 bis A8 und damit der Schaltzustand der Auswahlmatrix unverändert, wie in Fig. 3 an den Spalten 3, 5, 7 und 9 zu erkennen ist.

Charakterisiert man den Schaltzustand der Auswahlmatrix durch eine Spurzahl s (Spur deshalb, weil die Bits über die Auswahlmatrix in verschiedenen Schaltzuständen verschiedene Spuren durchlaufen), so läßt Fig. 3 erkennen, daß die Spurzahl s insgesamt acht verschiedene ganzzahlige Werte annehmen kann. Wird die Spurzahl so gewählt, daß sie im Schaltzustand nach Spalte 1 den Wert 0 bekommt und fortschreitend bis zum Schaltzustand nach Spalte 7 alle ganzzahligen Werte durchläuft, so gibt die Spurzahl s gleichzeitig die Zahl der übertragenen Stopfbits Modulo 8 an. Überspringt die Spurzahl die Zahl 7, wie beim Übergang von Spalte 7 nach Spalte 8 der Fig. 3, so werden der Lesezähler und die Verzögerungsglieder V1 bis V7 für einen Takt angehalten und im Beispiel nach Fig. 3 das siebte Byte nochmals ausgelesen, damit keine Information verloren geht. Die Steuerschaltung 15 stellt also den Schaltzustand der Schaltmatrix 5 dadurch ein, daß sie die zusätzlich zu übertragenden Bits mit einem Spurzahlzähler Modulo 8 zählt und entsprechend dem Stand s dieses Zählers Steueradressen für die Auswahlschaltungen A1 bis A8 abgibt.

Es sollen nun die Gründe und die Kriterien erläutert werden, nach denen erfindungsgemäß die Spurzahl (Modulo 8) vergrößert wird. Verkleinerungen kommen nicht in Frage, da im vorliegenden Fall immer nur zusätzliche Bits übertragen werden müssen. Außer Acht bleiben sollen im folgenden die Bits der Hilfsinformation, die nicht zu den Stopfbits gehören.

Vorrang vor allen anderen Kriterien hat das Abstandskriterium der Schreib- und Leseadressen. Weicht der Abstand von seinem Sollwert ab, werden solange Stopfbits eingefügt, bis der Sollabstand erreicht ist. Wegen des Rahmenaufbaus kann nur ein Bit pro Rahmenzeile gestopft werden, so daß - meist bei Inbetriebnahme der Anordnung - sehr lange gestopft werden muß. In diesem Falle durchläuft der Spurzahlzähler fortlaufend und zyklisch alle Werte von null bis sieben. Bei dem Sprung von sieben auf null werden - vergleiche die Tabelle in Fig. 3 - der Lesezähler 13 und die Verzögerungsglieder V1 bis V7 für einen Takt angehalten. Auch das Anhalten des Lesezählers 13 wird von der Steuerschaltung 15 übernommen.

Ein weiteres Kriterium für das Heraufsetzen der Spurzahl ist der Frequenzunterschied zwischen Schreib- und Lesetakt bzw. dem Bittakt des ersten Signals und dem Bittakt des zweiten Signals. Ob aufgrund dieses Unterschiedes gestopft werden muß oder nicht, wird mit Hilfe des Phasenvergleichers 16 und der Steuerschaltung 15 entschieden.

Der Phasenvergleicher 16 alleine vergleicht nur den Schreib- und Lesetakt und gibt das Ergebnis dieses Vergleichs dauernd an die Steuervorrichtung 15 ab. Signalisiert der Phasenvergleicher 16, daß gestopft werden soll - liegt also der Fall vor, daß eine Flanke des Lesetaktes der entsprechenden Flanke des langsameren Schreibtaktes davoneilt - so sollte, falls wirklich ein Bit gestopft wird, der Lesetakt für die Dauer eines Bits angehalten (auf der Zeitachse verschoben) werden, damit sich der Abstand entsprechend verkürzt und wegen des Ausbleibens der Verkürzung nicht dauernd Fehlentscheidungen gefällt werden. Das Anhalten des Lesetaktes für die Dauer eines Bits (des zweiten Signals) würde jedoch wieder schnelle Bausteine erfordern, die durch die Schaltung gerade vermieden werden sollen. Daher findet ein Verschieben des Lesetaktes nicht statt; welche äquivalenten Maßnahmen ersatzweise ergriffen werden, ist den weiter unten folgenden Ausführungen zu entnehmen. Zuvor soll jedoch auf einen Aspekt zum Jitter im wiedergewonnenen ersten Signal auf der Empfängerseite eingegangen werden.

In einem STM-1-Rahmen dürfen Bits nur an einer bestimmten Stelle der Rahmenzeilen gestopft werden. An den den Stopfstellen zeitlich vorangehenden Stellen dieser Zeile wird dem Empfänger durch die oben erwähnten Stopfinformationsbits mitgeteilt, ob das an der Stopfstelle befindliche Bit ein Stopfbit oder ein Informationsbit ist. Aus diesem Grunde muß die Entscheidung, ob gestopft wird oder nicht (Stopfentscheidung), größenordnungsmäßig eine Rahmenzeilenlänge vor der Stopfstelle gefällt werden. Schwankt der Zeitpunkt dieser Entscheidung zufällig relativ zum Rahmen, so hat das einen zusätzlichen Jitter zur Folge, den sogenannten Wartezeitjitter (vgl. hierzu: Duttweiler, D. L.: Waiting Time Jitter. Bell Syst. Tech. J. 51, (1972), Seite 165 bis 207). Es ist daher wünschenswert, daß die Entscheidung, ob an der Stopfstelle ein Stopfbit oder ein Informationsbit eingefügt werden soll, immer im gleichen zeitlichen Abstand vor dieser Stelle gefällt wird.

Erfindungsgemäß wird dieser zusätzliche Jitter (Wartezeitjitter) jedoch dadurch vermieden, daß der für die Stopfentscheidung maßgebliche Zeitpunkt systematisch variiert wird. Dieser Variation liegen folgende Überlegungen zugrunde:

Da der (unverschobene) Lesetakt auf den STM-1-Rahmen synchronisiert ist, lassen sich in ihm ausgewählte Flanken angeben, die jeweils in ausreichender Entfernung von den Stopfstellen liegen und immer den gleichen zeitlichen Abstand von ihnen haben.

Diese Flanken - nachfolgend Bezugsflanken genannt - werden von der Steuereinheit 15 erkannt (durch Abzählen der Flanken mit dem Auftreten eines Zeilenanfangs), die das Ausgangssignal des Phasenvergleichers 16 beim Auftreten der m-ten Flanke relativ zu einer Bezugsflanke auswertet, d.h., zu diesem Zeitpunkt wird das Vorzeichen der Phasenlage des Schreibtaktes zum (unverschobenen) Lesetakt bestimmt und mit der Kenntnis dieses Vorzeichens die Stopfentscheidung gefällt.

Die gesuchte ganze Zahl m ergibt aus der Forderung, daß der Betrag des Ausdruckes

$$m* \text{TL/TS} - k - s/8$$

als Funktion der ganzen Zahlen m und k möglichst klein werden soll. Hierbei bedeutet TL die Periodendauer des Lesetaktes, TS die Periodendauer des Schreibtaktes und s die oben erwähnte Spurzahl. Die Forderung selbst läßt sich aus einer Betrachtung der Phasendifferenz zwischen dem Schreibtakt und einem gedanklich um s Bit verschobenen Lesetakt zum Zeitpunkt einer Bezugsflanke herleiten. Die Division der Spurzahl s durch 8 hängt mit der Untersetzung der Bittakte im Verhältnis 1:8 zusammen. Bei einer Verallgemeinerung ist diese 8 durch n zu ersetzen. Der Bereich der zugelassenen m- und k-Werte ist so zu wählen, daß sich für alle s von null bis sieben der angegebene Ausdruck genügend klein machen läßt, da er ein Maß für den Phasenfehler ist, den die vorliegende Anordnung gegenüber einer Anordnung macht, in der die Bitzahlen miteinander verglichen werden.

Werden alle k- und m-Werte zugelassen, die betragsmäßig kleiner als 25 sind, so wird für TL/TS = 17,408/19,44 = 0,8955 und für alle s der angegebene Ausdruck kleiner als 0,1.

Das auf diese Weise bestimmte m (s) wird in einem Speicher der Steuerschaltung 15 abgelegt, die ebenfalls nur in CMOS-Technologie ausgeführt ist.

Die Spurzahl s bestimmt also die Flanke des Lesetaktes zu der der Phasenvergleicher 16 abgefragt wird und den Schaltzustand der Auswahlmatrix 5.

In Fig. 4 wird auf der Empfängerseite eines Übertragungssystems ein ankommendes und an einer Klemme 41 anliegendes erstes Binärsignal einem Serien-Parallel-Wandler 42 zugeführt. Dieses erste Binärsignal hat eine nominelle Bitrate von 155,52 Mbit/s und ist eines von vier STM-1-Signalen, das sich nach Zerlegung eines STM-4-Signals durch einen nicht gezeigten Demultiplexer ergibt. Gleichzeitig wird der Anordnung nach Fig. 4 der mit Taktlücken versehene Bittakt des ersten Binärsignals über eine Klemme 410 und die aus dem ersten Binärsignal gewonnenen Stopfinformationsbits über eine Klemme 418 zugeführt. Die Stopfinformationsbits und der mit Taktlücken versehene Bittakt werden aus dem übertragenen STM-4-Signal durch eine nicht gezeigte, dem Demultiplexer zugeordnete Anordnung gewonnen.

Die Klemme 418 ist mit einer Steuervorrichtung 415 verbunden, die im wesentlichen aus einem zyklisch laufenden Spurzahlzähler besteht, mit dessen Hilfe der Schaltzustand einer Auswahlmatrix 45 eingestellt wird. Der Spurzahlzähler wird mit dem Bytetakt getaktet, der sich aus dem Bittakt des ersten Binärsignals nach Teilung im Verhältnis 1:8 durch einen Teiler 411 ergibt. Die Lücken im Bittakt an der Klemme 410 sind so verteilt, daß sich nach der Herabsetzung des Taktes am Ausgang des Teilers 411 ein Bytetakt mit Bytetaktlücken ergibt. Zur Orientierung im aktuellen Rahmen des ersten Binärsignals werden der Steuervorrichtung 415 über eine Klemme 419 die hierfür notwendigen Informationen zugeführt. Die Einheit, die diese Informationen liefert, ist ebenfalls dem Demultiplexer zugeordnet.

Die Auswahlmatrix 45 ist nach dem gleichen Prinzip konstruiert wie die Auswahlmatrix 5 in Fig. 1 bzw. Fig. 2.

Vom Serien-Parallel-Wandler 42 wird das erste Binärsignal byteweise auf Leitungen 431 bis 438 an die Auswahlmatrix 45 übergeben. Gesteuert durch einen Schreibzähler 412, der von dem mit Lücken versehenen Bytetakt getaktet wird, wird das erste Binärsignal sodann ohne Stopfbytes byteweise in einen Pufferspeicher 44 eingeschrieben. Ein Lesezähler 413 steuert das ebenfalls byteweise Auslesen aus dem Pufferspeicher 44. Die ausgelesenen Bytes werden über Leitungen 461 bis 468 an einen Parallel-Serien-Wandler 47 weitergeleitet, an dessen Ausgang 48 das zweite Binärsignal mit einer nominellen Bitrate von 139,264 Mbit/s anliegt. Ein Phasenvergleicher 49 ist Bestandteil einer nicht abgebildeten Phasenregelschleife, mit deren Hilfe der (lückenlose) Bittakt des zweiten Binärsignals gewonnen wird. Dieser Bittakt liegt an einer Klemme 417 an. Er wird durch einen Teiler 414 im Verhältnis 1:8 heruntergeteilt. Mit dem geteilten Takt wird der Lesezähler 413 versorgt und mit dem geteilten und ungeteilten Takt der Parallel-Serien-Wandler 47.

Die Fig. 4 zeigt - und dies gilt auch für alle anderen Figuren - nicht alle Taktversorgungsleitungen. Da jedoch die Versorgung von digitalen Bausteinen mit Takten zum handwerklichen Können des Fachmanns gehört, sind derartige Versorgungen fortgelassen, um die Figuren nicht unübersichtlich zu machen.

**Patentansprüche**

1. Schaltungsanordnung zur Anpassung der Bitraten zweier Signale mit

- einem Serien-Parallel-Wandler (2) zur Wandlung von jeweils n seriellen Bits eines ersten Signals in eine Gruppe von n parallelen Bits,
- einem elastischen Speicher (4) zum jeweiligen Einschreiben und zum jeweiligen Auslesen einer Gruppe von parallelen Bits,
- einer ein zweites Signal liefernden Auswahlmatrix (5), die bei einem Stopfvorgang zur Verzögerung bestimmter Bits von aufeinanderfolgenden Gruppen paralleler Bits und zur Einfügung von Stopfbits anstelle der bestimmten Bits vorgesehen ist, und

- einer Steuervorrichtung (15) zur Steuerung des Auslesevorgangs aus dem elastischen Speicher (4) und der Auswahlmatrix (5) in Abhängigkeit von einem Phasenvergleich eines Schreibtaktes und eines Lesetaktes zu einem immer im gleichen zeitlichen Abstand von einer Stopfstelle liegenden Zeitpunkt und einer Füllstandsüberwachung (8) des elastischen Speichers (4).

2. Schaltungsanordnung zur Anpassung der Bitraten zweier Signale nach Anspruch 1,
   dadurch gekennzeichnet, daß jeweils Teiler (11, 14), die ein Teilerverhältnis von 1:n aufweisen, zur Erzeugung des Schreibtaktes aus dem Bittakt des ersten Signals und des Lesetaktes aus dem Bittakt des zweiten Signals vorgesehen sind.

3. Schaltungsanordnung zur Anpassung der Bitraten zweier Signale nach Anspruch 2,
   dadurch gekennzeichnet, daß ein Phasenvergleicher (16) zum Phasenvergleich des Schreibtaktes und des Lesetaktes vorgesehen ist und daß die Steuervorrichtung (15) zur Auswertung des Ausgangssignals des Phasenvergleichers (16) beim Auftreten einer vorbestimmten Flanke und zur Einstellung der Auswahlmatrix für die Einfügung wenigstens eines Stopfbits, wenn die Füllstandsüberwachung (8) ein zu starkes Abweichen vom Sollwert feststellt.

4. Schaltungsanordnung zur Anpassung der Bitraten zweier Signale nach Anspruch 3,
   dadurch gekennzeichnet, daß die Steuervorrichtung (15) zur Erhöhung einer Spurzahl (s) um eine Einheit Modulo n pro Stopfbit und zur Wiederholung des Auslesens einer Bitgruppe aus dem elastischen Speicher (4) vorgesehen ist, wenn die Spurzahl s den Wert n - 1 überspringt.

5. Schaltungsanordnung zur Anpassung der Bitraten zweier Signale nach Anspruch 4,
   dadurch gekennzeichnet, daß die vorbestimmte Flanke die m-te Flanke relativ zu einer Bezugsflanke im Lesetakt ist, wobei sich m aus der Forderung ergibt, den Betrag des Ausdrucks
   
   $$m*TL/TS - k - s/n$$
   
   als Funktion der ganzen Zahlen m und k möglichst klein zu machen, wobei TS bzw. TL die Periodendauer des Schreibtaktes bzw. Lesetaktes bedeutet.

6. Schaltungsanordnung zur Anpassung der Bitraten zweier Signale nach einem der Ansprüche 1 bis 5,
   dadurch gekennzeichnet, daß es sich bei dem elastischen Speicher (4) um einen adressierbaren Pufferspeicher handelt, der zum Empfang von Schreibadressen von einem den Schreibtakt erhaltenen Schreibzähler (12) und von Leseadressen von einem den Lesetakt erhaltenen Lesezähler (13) vorgesehen ist.

7. Schaltungsanordnung zur Anpassung der Bitraten zweier Signale nach Anspruch 6,
   dadurch gekennzeichnet, daß die Füllstandsüberwachung (9) zum Vergleich der Schreib- und Leseadressen und bei Abweichung von einer Adressensolldifferenz zur Abgabe eines Signals an die Steuervorrichtung (15) vorgesehen ist und daß die Steuervorrichtung (15) zur Regelung der Adressendifferenz durch eine Veränderung des Schaltzustandes der Auswahlmatrix (5) und durch ein Anhalten des Lesezählers (13) vorgesehen ist.

8. Schaltungsanordnung zur Anpassung der Bitraten zweier Signale nach einem der Ansprüche 1 bis 7,
   dadurch gekennzeichnet, daß die Auswahlmatrix (5) mit einem Parallel-Serien-Wandler (7) zur Wandlung von jeweils einer Gruppe von n parallen Bits in jeweils n serielle Bits eines zweiten Signals gekoppelt ist.

9. Schaltungsanordnung zur Anpassung der Bitraten zweier Signale mit

   - einem Serien-Parallel-Wandler (42) zur Wandlung von jeweils n seriellen Bits eines ersten Signals in eine Gruppe von n parallelen Bits,
   - einer Auswahlmatrix (45), die bei einem Entstopfvorgang zur Verzögerung bestimmter Bits von aufeinanderfolgenden Gruppen paralleler Bits des ersten Signals und zur Weiterleitung von Gruppen paralleler Bits mit Ausnahme der Stopfbits vorgesehen ist,
   - einem elastischen Speicher (44) zum jeweiligen Einschreiben einer von der Auswahlmatrix (45) gelieferten Gruppe von parallelen Bits und zum jeweiligen Auslesen einer Gruppe von parallelen Bits für ein zweites Signal,
   - einer Steuervorrichtung (415) zum Empfang von Stopfinformationsbits und zur Steuerung der Auswahlmatrix (45) und
   - einer Phasenregelschleife zur Steuerung des Ausschreibens der Bits aus dem elastischen Speicher (44).

10. Schaltungsanordnung zur Anpassung der Bitraten zweier Signale nach Anspruch 9,
    dadurch gekennzeichnet, daß jeweils Teiler (411, 414), die ein Teilerverhältnis von 1:n aufweisen, zur Erzeugung des Schreibtaktes aus dem Bittakt des ersten Signals und des Lesetaktes aus dem Bittakt des zweiten Signals vorgesehen sind.

11. Schaltungsanordnung zur Anpassung der Bitraten zweier Signale nach Anspruch 10,
    dadurch gekennzeichnet, daß ein Phasenvergleicher (49) zum Phasenvergleich der von einem Schreibzähler (412) und einem Lesezähler (413) gelieferten Adressen und zur Gewinnung des Bittaktes für das zweite Signal vorgesehen ist.

12. Schaltungsanordnung zur Anpassung der Bitraten zweier Signale nach Anspruch 11,
dadurch gekennzeichnet, daß es sich bei dem elastischen Speicher (44) um einen adressierbaren Pufferspeicher handelt, der zum Empfang von Schreibadressen von dem Schreibzähler (412) und von Leseadressen von dem Lesezähler (413) vorgesehen ist.

13. Schaltungsanordnung zur Anpassung der Bitraten zweier Signale nach einem der Ansprüche 9 bis 12,
dadurch gekennzeichnet, daß der elastische Speicher (44) mit einem Parallel-Serien-Wandler (47) zur Wandlung von jeweils einer Gruppe von n parallen Bits in jeweils n serielle Bits eines zweiten Signals gekoppelt ist.

**Claims**

1. Circuit for adapting the bit rates of two signals, comprising

   - a serial-to-parallel converter (2) for converting n serial bits of a first signal into a group of n parallel bits,
   - an elastic store (4) for writing and reading respectively, a group of parallel bits,
   - a selection matrix (5) producing a second signal, which matrix delays certain bits of successive groups of parallel bits and justifies justification bits instead of the certain bits during a justification action, and
   - a controller (15) for controlling the signal read from the elastic store (4) and for controlling the selection matrix (5) in dependence on a phase comparison of a write clock and a read clock at an instant always equally distant in time from a justification location, and a justification monitoring circuit (8) of the elastic store (4).

2. Circuit for adapting the bit rates of two signals as claimed in Claim 1, characterized in that dividers (11, 14) having a dividing ratio of 1:n produce the write clock from the bit clock of the first signal and the read clock from the bit clock of the second signal.

3. Circuit for adapting the bit rates of two signals as claimed in Claim 2, characterized in that a phase comparator (16) compares the phases of both the write clock and the read clock and in that the controller (15) evaluates the output signal of the phase comparator (16) when a predefined edge occurs and sets the selection matrix for the insertion of at least one justification bit when the justification monitoring circuit (8) finds too strong a deviation from the target value.

4. Circuit for adapting the bit rates of two signals as claimed in Claim 3, characterized in that the controller (15) increments modulo-n a track number (s) by unity for each justification bit and repeats the reading of a bit group from the elastic store (4) if the track number (s) exceeds the value n-1.

5. Circuit for adapting the bit rates of two signals as claimed in Claim 4, characterized in that the predetermined edge is the $m^{th}$ edge relative to a reference edge in the read clock, while m is obtained from the requirement to make the value of the equation
$$m*TL/TS - k - s/n$$
as a function of the integers m and k as small as possible, while TS and TL denote the cycle of the write clock or read clock, respectively.

6. Circuit for adapting the bit rates of two signals as claimed in one of the Claims 1 to 5, characterized in that the elastic store (4) is an addressable buffer store which receives write addresses from a write counter (12) that receives the write clock and the read addresses from a read counter (13) that receives the read clock.

7. Circuit for adapting the bit rates of two signals as claimed in Claim 6, characterized in that the justification monitoring circuit (9) compares the write and read addresses and applies a signal to the controller (15) if a deviation from the target address is found and in that the controller (15) controls the difference of addresses in that the switching state of the selection matrix (5) is changed and the read counter (13) is stopped.

8. Circuit for adapting the bit rates of two signals as claimed in one of the Claims 1 to 7, characterized in that the selection matrix (5) is coupled to a parallel-to-serial converter (7) for converting a group of n parallel bits into n serial bits of a second signal.

9. Circuit for adapting the bit rates of two signals comprising

   - a serial-to-parallel converter (42) for converting n serial bits of a first signal into a group of n parallel bits
   - a selection matrix (45) which, in the case of a dejustification, delays certain bits of successive groups of parallel bits of the first signal and transfers groups of parallel bits with the exception of dejustification bits.
   - an elastic store (44) for writing a group of parallel bits produced by the selection matrix (45) and for reading a group of parallel bits for a second signal

- a controller (415) for receiving justification indication bits and for controlling the selection matrix (45), and
- a phase-locked loop for controlling the reading of bits from the elastic store (44).

10. Circuit for adapting the bit rates of two signals as claimed in Claim 9, characterized in that dividers (411, 414) which have a dividing ratio of 1:n derive the write clock from the bit clock of the first signal and the read clock from the bit clock of the second signal.

11. Circuit for adapting the bit rates of two signals as claimed in Claim 10, characterized in that a phase comparator (49) compares the phase of the addresses produced by a write counter (412) and a read counter (413) and extracts the bit clock for the second signal.

12. Circuit for adapting the bit rates of two signals as claimed in Claim 11, characterized in that the elastic store (44) is an addressable buffer store which receives write addresses from the write counter (412) and read addresses from the read counter (413).

13. Circuit for adapting the bit rates of two signals as claimed in one of the Claims 9 to 12, characterized in that the elastic store (44) is coupled to a parallel-to-serial converter (47) for converting a group of n parallel bits into n serial bits of a second signal.

**Revendications**

1. Montage de circuit d'adaptation des débits binaires de deux signaux, comportant:

- un convertisseur série/parallèle (2) pour convertir respectivement n bits sériels d'un premier signal en un groupe de n bits parallèles;
- une mémoire élastique (4) pour, respectivement, traduire et extraire un groupe de bits parallèles;
- une matrice de sélection (5) délivrant un deuxième signal, qui est destinée, lors d'une opération de bourrage, à retarder certains bits de groupes successifs de bits parallèles et à introduire des bits de bourrage en lieu et place des bits déterminés, et
- un dispositif de commande (15) pour commander l'opération d'extraction de la mémoire élastique (4) et de la matrice de sélection (5) en fonction d'une comparaison de phase d'un rythme d'écriture et d'un rythme de lecture à un moment se trouvant toujours à une distance dans le temps égale d'un emplacement de bourrage, et d'un contrôle de l'état de remplissage (8) de la mémoire élastique (4).

2. Montage de circuit d'adaptation des rythmes binaires de deux signaux selon la revendication 1, caractérisé en ce que des diviseurs (11, 14), qui présentent un rapport de division de 1:n, sont respectivement destinés à produire le rythme d'écriture à partir du rythme binaire du premier signal et le rythme de lecture à partir du rythme binaire du deuxième signal.

3. Montage de circuit d'adaptation des débits binaires de deux signaux selon la revendication 2, caractérisé en ce qu'un comparateur de phase (16) est destiné à comparer les phases du rythme d'écriture et du rythme de lecture, et en ce que le dispositif de commande (15) évalue le signal de sortie du comparateur de phase (16) à l'apparition d'un flanc prédéterminé et règle la matrice de sélection pour l'insertion d'au moins un bit de bourrage lorsque le contrôle de l'état de remplissage (8) constate un écart trop important de la valeur prescrite.

4. Montage de circuit d'adaptation des débits binaires de deux signaux selon la revendication 3, caractérisé en ce que le dispositif de commande (15) est destiné à augmenter le nombre de traces (s) d'une unité modulo n par bit de bourrage et à répéter l'extraction d'un groupe de bits de la mémoire élastique (4) lorsque le nombre de traces s saute la valeur n - 1.

5. Montage de circuit d'adaptation des débits binaires de deux signaux selon la revendication 4, caractérisé en ce que le flanc prédéterminé est le $m^{ème}$ flanc par rapport à un flanc de référence du rythme de lecture, où m résulte de l'exigence que la valeur absolue de l'expression

$$m*TL/TS - k - s/n$$

en fonction des nombres entiers m et k soit la plus petite possible, TS ou TL désignant la durée de la période du rythme d'écriture ou du rythme de lecture.

6. Montage de circuit d'adaptation des débits binaires de deux signaux selon l'une quelconque des revendications 1 à 5, caractérisé en ce que la mémoire élastique (4) est une mémoire tampon adressable, qui est destinée à recevoir des adresses d'écriture d'un compteur d'écriture (12) recevant le rythme d'écriture et des adresses de lecture d'un compteur de lecture (13) recevant le rythme de lecture.

7. Montage de circuit d'adaptation des débits binaires de deux signaux selon la revendication 6, caractérisé en ce que le contrôle de l'état de remplissage (9) sert à comparer les adresses d'écriture et de lecture et, dans le cas d'un écart vis-à-vis d'une différence prescrite d'adresses, à délivrer un signal au dispositif de commande (15), et en ce que le dispositif de commande (15) sert à régler la différence d'adresse par une modification de l'état de commutation de la matrice de sélection (5) et par un arrêt du compteur de lecture (13).

8. Montage de circuit d'adaptation des rythmes binaires de deux signaux selon l'une quelconque des revendications 1 à 7, caractérisé en ce que la matrice de sélection (5) est couplée à un convertisseur parallèle/série (7) pour convertir respectivement un groupe de n bits parallèles en respectivement n bits sériels d'un deuxième signal.

9. Montage de circuit d'adaptation des débits binaires de deux signaux comportant:

    - un convertisseur série/parallèle (42) pour convertir respectivement n bits sériels d'un signal en un groupe de n bits parallèles;
    - une matrice de sélection (45), qui est destinée, lors d'une opération de débourrage, à retarder certains bits de groupes successifs de bits parallèles du premier signal et à transmettre des groupes de bits parallèles à l'exception des bits de bourrage;
    - une mémoire élastique (44) pour, respectivement, inscrire un groupe de bits parallèles délivré par la matrice de sélection (45) et extraire un groupe de bits parallèles pour un deuxième signal;
    - un dispositif de commande (415) pour recevoir des bits d'informations de bourrage et pour commander la matrice de sélection (45), et
    - une boucle à phase asservie pour commander la transcription des bits de la mémoire élastique (44).

10. Montage de circuit d'adaptation des débits binaires de deux signaux selon la revendication 9, caractérisé en ce que des diviseurs (411, 414), qui présentent un rapport de division de 1:n, sont respectivement prévus pour produire le rythme d'écriture à partir du rythme binaire du premier signal et le rythme de lecture à partir du rythme binaire du deuxième signal.

11. Montage de circuit d'adaptation des débits binaires de deux signaux selon la revendication 10, caractérisé en ce qu'un comparateur de phase (49) est prévu pour comparer en phase les adresses délivrées par un compteur d'écriture (412) et par un compteur de lecture (413) et pour obtenir le rythme binaire pour le deuxième signal.

12. Montage de circuit d'adaptation des débits binaires de deux signaux selon la revendication 11, caractérisé en ce que la mémoire élastique (44) est une mémoire tampon adressable, qui est destinée à recevoir les adresses d'écriture du compteur d'écriture (412) et les adresses de lecture du compteur de lecture (413).

13. Montage de circuit d'adaptation des débits binaires de deux signaux selon l'une quelconque des revendications 9 à 12, caractérisé en ce que la mémoire élastique (44) est couplée à un convertisseur parallèle/série (47) pour convertir respectivement un groupe de n bits parallèles en respectivement n bits sériels d'un deuxième signal.

FIG.1

FIG.4

FIG.2

Tabelle

|      | 1   | 2   | 3   | 4   | 5   | 6   | 7   | 8   | 9   | 10  |
| ---- | --- | --- | --- | --- | --- | --- | --- | --- | --- | --- |
| Z1   | --  | a2  | b2  | c2  | d2  | e2  | f2  | f2  | g2  | h2  |
| Z2   | --  | a3  | b3  | c3  | d3  | e3  | f3  | f3  | g3  | h3  |
| Z3   | --  | a4  | b4  | c4  | d4  | e4  | f4  | f4  | g4  | h4  |
| Z4   | --  | a5  | b5  | c5  | d5  | e5  | f5  | f5  | g5  | h5  |
| Z5   | --  | a6  | b6  | c6  | d6  | e6  | f6  | f6  | g6  | h6  |
| Z6   | --  | a7  | b7  | c7  | d7  | e7  | f7  | f7  | g7  | h7  |
| Z7   | --  | a8  | b8  | c8  | d8  | e8  | f8  | f8  | g8  | h8  |
| Z8   | a1  | b1  | c1  | d1  | e1  | f1  | g1  | g1  | h1  | i1  |
| Z9   | a2  | b2  | c2  | d2  | e2  | f2  | g2  | g2  | h2  | i2  |
| Z10  | a3  | b3  | c3  | d3  | e3  | f3  | g3  | g3  | h3  | i3  |
| Z11  | a4  | b4  | c4  | d4  | e4  | f4  | g4  | g4  | h4  | i4  |
| Z12  | a5  | b5  | c5  | d5  | e5  | f5  | g5  | g5  | h5  | i5  |
| Z13  | a6  | b6  | c6  | d6  | e6  | f6  | g6  | g6  | h6  | i6  |
| Z14  | a7  | b7  | c7  | d7  | e7  | f7  | g7  | g7  | h7  | i7  |
| Z15  | a8  | b8  | c8  | d8  | e8  | f8  | g8  | g8  | h8  | i8  |

t

FIG.3